# EUROPEAN PATENT APPLICATION

(11) **EP 1 783 767 A1**
(43) Date of publication of application: **09.05.2007**
(21) Application number: 05757760.3
(22) Date of filing: 04.07.2005
(51) Int. Cl.: G11B 20/10, G06F 3/08, G06F 12/14

(54) **DISK/DISK-DRIVE MANAGEMENT SYSTEM**

(30) Priority: 08.07.2004 JP 2004201914
(71) Applicant: IntelligentDisc, Inc., Yokohama-shi, Kanagawa 222-0033 (JP)
(72) Inventor: SHIGETOMI, Takashi, c/o IntelligentDisc, Inc., Kouhoku-ku, Yokohama-shi, Kanagawa (JP); KARIMOTO, Hiroyasu, c/o IntelligentDisc, Inc., Kouhoku-ku, Yokohama-shi, Kanagawa (JP)
(74) Representative: Vossius & Partner
(86) International application number: PCT/JP2005/012712
(87) International publication number: WO 2006/006543

(57) **Abstract**

There is provided a disk/disk drive management system that is capable of setting limits to reproduction of a disk and a disk drive used for the disk reproduction, for example, setting limits to reproduction of a rental disk to prevent unrestricted copying.

On a first storage region of a disk having optical information written thereto and a second storage region of the disk having an electronic circuit 11 mounted thereon, a plurality of arbitrary codes (A001 to A999) assigned uniquely to the disk are stored. When the disk is loaded into a disk drive 1, the plurality of codes are read in and written to a code memory 114 of the electronic circuit 11, and an unused code of the plurality of codes is written to a memory 14 provided in the disk drive 1 and/or to a management memory 115 provided on the electronic circuit 11. The disk drive information that was used or is being used, user information, and other information can also be written to the management memory 115. The reproduction of the disk, and the disk drive used for the disk reproduction, are controlled based on the information written to the memory 14 or management memory 115.

## Description

### FIELD OF THE INVENTION

The present invention relates to a contents management system, and more particularly to a disk/disk drive management system that reliably limits the reproduction and utilization of the contents stored on a disk.

### DESCRIPTION OF THE RELATED ART

With the advent of large capacity storage media such as a compact disk (CD), a digital video disk (DVD), etc., it is becoming standard to store contents, such as music, movies, and game software, on these storage media. In CDs and DVDs, music and movies are recorded in special formats, so even if simple data copying is performed with a computer, etc., music and movies cannot be reproduced from the copied data.

On the other hand, when the above-described special format processing is not performed on the contents stored on these storage media, if there is no special authentication means, they can be copied without any restriction. This has become a serious problem from the viewpoint of copyright protection.

In addition, even if special format processing is performed, the prevention of copying is not totally secure. That is, drive units are now widespread for writing data to storage media of various kinds such as CD-R (recordable), CD-RW (rewritable), DVD-R, DVD-RW, DVD-RAM (random access memory), etc., and it is possible to illegally copy data from CD or DVD into a similar storage medium with special software and reproduce it with a general-purpose reproducer.

As techniques for preventing the illegal disk copying, encryption, insertion of copy protect signals or authentication information, error correction, etc., have been proposed. For example, they are disclosed in Patent Documents 1 through 4.
[Patent Document 1] Japanese Patent Laid-Open Publication No. 2002-92894 (pp.16-26, FIG. 1)
[Patent Document 2] Japanese Patent Laid-Open Publication No. 2004-46859 (pp.21-27, FIG. 2)
[Patent Document 3] Japanese Patent Laid-Open Publication No. 2003-77218 (pp.14-17, FIG. 1)
[Patent Document 4] Japanese Patent Laid-Open Publication No. 2004-127448 (pp.12-16, FIG. 1)

### DISCLOSURE OF THE INVENTION

### PROBLEMS TO BE SOLVED BY THE INVENTION

However, in the insertion of copy protect signals and authentication signals, special signal processing is required for protection, or authentication activities become necessary. In addition, decoding information becomes necessary to decode a ciphered signal, so the system becomes complicated. The error correction is not a technique that guarantees reliability and safety.

Furthermore, in the case of a rental disk, customers often lend it, so that the original profit of the disk rental business is often reduced.

It is an object of the present invention to provide a disk/disk drive management system that is capable of easily setting limits to disk reproduction and a disk drive used for disk reproduction.

Another object of the present invention is to provide a disk/disk drive management system that is capable of setting limits to the reproduction of rental disks to prevent illegal copying, or imposing an additional fee when utilization exceeds limits.

### MEANS FOR SOLVING THE PROBLEMS

In order to solve the above problems, a disk/disk drive management system according to the present invention employs the following featured structures.
(1) A disk/disk drive management system in which
   on a first storage region of a disk having optical information written thereto and a second storage region of the disk having an electronic circuit mounted thereon, a plurality of arbitrary codes assigned uniquely to said disk are stored;
   when said disk is loaded into a disk drive, said plurality of codes of said disk are read in and written to a code memory of said electronic circuit, and one of said plurality of codes is written to one memory provided in said disk drive and/or to a management memory provided on said electronic circuit; and
   reproduction of said disk by said disk drive is controlled based on said one code written to said one memory and/or said management memory.
(2) The disk/disk drive management system as set forth in claim 1, wherein said one code written to said one memory and/or said management memory is an unused code.
(3) The disk/disk drive management system as set forth in claim 1 or 2, wherein said electronic circuit has a management section for reading out said one code written to said one memory and/or said management memory and controlling reproduction of said disk.
(4) The disk/disk drive management system as set forth in any of claims 1 through 3, wherein said one code written to said one memory and/or said management memory is an unused code every time said disk is loaded into said disk drive.
(5) The disk/disk drive management system as set forth in any of claims 1 through 4, wherein management of said disk and disk drive includes at least either one of a number of times said disk is reproduced, a number of available disk drives, or a number of users.
(6) The disk/disk drive management system as set forth in any of claims 1 through 5, wherein the electronic circuit of said disk comprises a radio frequency identification (RF-ID) section.
(7) The disk/disk drive management system as set forth in any of claims 1 through 6, wherein the codes of said disk contain a code representing the type of disk being used, etc.
(8) The disk/disk drive management system as set forth in any of claims 1 through 7, wherein said disk drive is connected to a personal computer so that predetermined data can be transmitted and received there between.
(9) A disk/disk drive management system comprising:
   a disk drive for rotating a disk to control reading and writing of data, said disk having on one surface thereof at least either a read-only memory region storing music information, image information, program information, and other information, or a random-access memory region to which arbitrary data can be written, and also having an electronic circuit with a central processing unit function, and further storing a plurality of codes uniquely assigned thereto;
   an interface mounted on said disk for transmitting data processed by said electronic circuit to an external device and receiving data from said external device;
   a signal reader/writer for transmitting and receiving data between said electronic unit and said external device through said interface; and
   an arithmetic unit connected to said disk drive for carrying out predetermined arithmetic processing;
   wherein, when said disk is loaded into said disk drive, said plurality of codes of said disk are read in and written to a code memory of said electronic circuit, and one of said plurality of codes is written to one memory provided in said disk drive and/or to a management memory provided on said electronic circuit; and
   reproduction of said disk by said disk drive is controlled based on said one code written to said one memory.
(10) The disk/disk drive management system as set forth in claim 9, wherein said one code written to said one memory is an unused code.
(11) The disk/disk drive management system as set forth in claim 9, wherein a living body authentication device for limiting start and operation of the system to permitted users is connected to said arithmetic unit for limiting start of the system.
(12) The disk/disk drive management system as set forth in claim 9, wherein a living body authentication device for limiting start and operation of the system to permitted users is connected to said disk drive for limiting start of the system.
(13) The disk/disk drive management system as set forth in claim 11 or 12, wherein said living body authentication device is based on at least either one of among fingerprint authentication, face authentication, voiceprint authentication, and iris authentication.
(14) The disk/disk drive management system as set forth in any of claims 9 through 13, wherein said electronic circuit comprises a radio frequency identification (RF-ID) section.
(15) The disk/disk drive management system as set forth in claim 9, wherein signal transmission and reception between said electronic circuit and said external arithmetic unit is performed through a cable.
(16) The disk/disk drive management system as set forth in claim 9, wherein signal transmission and reception between said electronic circuit and said external arithmetic unit is performed through said interface.
(17) The disk/disk drive management system as set forth in any of claims 9 through 16, wherein the data transmission and reception to and from said electronic circuit through said interface is performed by radio.
(18) The disk/disk drive management system as set forth in any of claims 1 through 17, wherein said disk comprises an optical disk.

### ADVANTAGES OF THE INVENTION

According to the present invention, the number of reproduction of a disk, specification of a disk drive used for disk reproduction, number of available disk drives, number of users, history of disk reproduction, etc., can be managed. Accordingly, the present invention has the advantage that the utilization of a disk can be limited in an arbitrary form.

### BRIEF DESCRIPTION OF THE DRAWINGS

Fig. 1 is a schematic block diagram showing the basic configuration of a disk/disk drive management system according to the present invention;
Fig. 2 are examples of the code information (A) stored in the electronic circuit 11 and code information (B) written to the memories in a plurality of disk drives;
Fig. 3 is a flowchart of an example of operation of the disk/disk drive management system according to the present invention;
FIG. 4 is a schematic block diagram showing another embodiment of the present invention;
FIG. 5 is a schematic block diagram showing further embodiment of the present invention;
FIG. 6 is a schematic block diagram showing other embodiment of the present invention.

### DESCRIPTION OF THE NUMERALS

- 1: a disk drive
- 2: a reader/writer
- 3: an arithmetic unit
- 4: a living body authentication device
- 11: an electronic circuit
- 12: an optical data storage section
- 13: a drive section
- 14: a memory
- 31: a read-only memory (ROM)
- 32: a random access memory (RAM)
- 33: an arithmetic processing section
- 34: a display
- 111: a transmitter-receiver section
- 112: a signal processing section
- 113: a management section
- 114: a code memory
- 115: a management memory

### DESCRIPTION OF THE PREFERRED EMBODIMENTS

The configuration and operation of a preferred embodiment of a disk/disk drive management system according to the present invention will hereinafter be described in detail with reference to the accompanying drawings.

The present invention makes use of an optical disk equipped with an electronic circuit that has a central processing unit (CPU) function. However, the present invention is not limited to the optical disk, but may employ arbitrary disks.

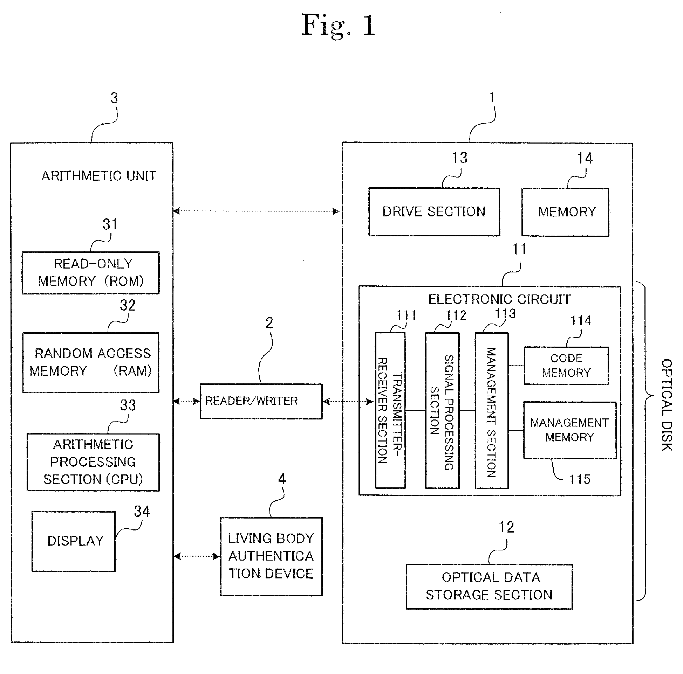

FIG. 1 is a schematic block diagram showing the basic configuration of a disk/disk drive management system according to the present invention. In the following example, as a disk to which the present invention is applied, an optical disk is employed. In this system, a disk drive 1 rotates the optical disk to read out contents from the optical disk or write data to the optical disk. A data storage section provided on one side of the optical disk is used to store optical data such as contents, etc. The other side of the optical disk is equipped with an electronic circuit (CPU) 11 for carrying out predetermined signal processing. The electronic circuit 11 contains a transmitter-receiver section 111, a signal processing section 112, a management section 113, a code memory 114, and a management memory 115. The processed signals in the electronic circuit 11 and external information are sent to and received from an external circuit through the radio section (transmitter-receiver section) 111 of the disk drive 1 as radio signals, for example.

Referring to FIG. 1, the C 1 is provided with a disk insertion slot (not shown) into which the optical disk is inserted. The optical disk inserted is rotated at a predetermined speed, a laser light beam from an optical pickup is focused on an optical disk surface, and the reflected light beam is detected through the optical pickup, whereby optically recorded data is read out. The laser light beam from the optical pickup is also focused on the optical disk surface to write data.

The disk drive 1 has a drive section 13 for rotating the optical disk and a memory 14. One side of the optical disk is equipped with an optical data storage section 12, which has a ROM region storing music information, image information, program information, and other information, and a RAM region to which arbitrary data can be written. The other side of the optical disk is equipped with the electronic circuit 11 that has a CPU function. The electronic circuit 11 can be formed, for example, as a radio frequency identification (RF-ID) section. Of course, the electronic circuit 11 can also be provided on the above-described one side.

The RF-ID section is generally a section that makes possible radio communication using electromagnetic waves. The RF-ID section makes possible the transmission and reception (reading and writing) of the data within a semiconductor memory (IC chip) by radio. The RF-ID section normally comprises an IC chip and a coil-shaped antenna connected with the IC chip.

A reader/writer 2 has a read/write function, and transmits and receives data to and from the transmitter-receiver section 111, which is provided in the IC chip of the RF-ID section (electronic circuit 11) arranged on the optical disk surface, by radio communication. The data communication between the reader/writer 2 and the transmitter-receiver section 111 of the electronic circuit 11 is performed, for example, at a transmission rate of 106 Kbytes/s (Kbps).

If the electronic circuit 11 (RF-ID section) receives radio waves from the reader/writer 2 through the antenna (transmitter-receiver section 111), an electromotive force is produced (electromagnetic induction, etc.) by resonance, and this electromotive force is rectified by a power-supply rectifying section to employ power for the electronic circuit 11. With this power, the IC chip within the RF-ID section is started. It is a matter of course that power supply is not limited to such a configuration.

An arithmetic unit 3 is, for example, a personal computer (PC) and contains a read-only memory (ROM) 31 for storing basic information such as an operating system (OS), a random access memory (RAM) 32 as a rewritable storage device, an arithmetic processing section 33 such as a CPU, and a display 34 such as a liquid crystal display. The arithmetic unit 3 functions to transmit and receive data to and from the disk drive 1 to perform desired signal processing.

A living body authentication device 4 is used to limit the start and operation of this system to permitted users. For example, it can be used for fingerprint authentication, face authentication, voiceprint authentication, and iris authentication. When starting the PC (arithmetic unit) 3, a user touches, for example, a fingerprint reader for fingerprint authentication with a predetermined finger so that the fingerprint is optically read, and then it is compared with a previously registered user's fingerprint. Only when both match with each other, that user is permitted to use.

In the system configured as described above, on the storage section (ROM section) of the optical disk in this embodiment, a plurality of arbitrary codes uniquely assigned to that disk are stored. In this embodiment, successive numbers A000 to A999 are stored. These codes may be random codes. The header of each code represents the type of optical disk used, etc., and is given A, B, C, etc., for specifying theme music, a movie title, etc.

If the optical disk is inserted in the optical disk insertion slot of the disk drive 1, data is read out from the optical disk. An initialization process is first carried out. That is, code information is read from the ROM region of the optical disk into the disk drive 1 and written to the code memory 114 of the electronic circuit 11.

After the insertion of the optical disk, the disk drive 1 writes an arbitrary one of the codes stored on the code memory 114 of the electronic circuit 11 to an internal memory 14 thereof. In this embodiment, the code to be written to the internal memory 14 is incremented one by one from the code A001 of the codes A001 to A999, and once a code is used, that code is never used. The number 999 in the codes A001 to A999 means that the insertion of the optical disk into the disk drive 1 and the drive and reproduction of the optical disk can be performed up to 999 times. Therefore, the optical disk can be reproduced 999 times with the same disk drive. In other words, an allowable reproduction number for the optical disk is 999 times. As previously described, the codes may be arbitrary and random. The management memory 11, as described later, stores the number of times the optical disk was reproduced, code information, user information, and disk drive information that is being used or was used.

In this embodiment, the management section 113 is provided in the electronic circuit 11 and, based on the information stored on the code memory 114, management memory 115 of the electronic circuit 11 or memory 14 of the disk drive 1, recognizes the number of use (reproduction) of the optical disk (the number of times the optical disk was loaded into the disk drive 1), and the identity of the disk drive 1.

That is, when loading the optical disk into the disk drive 1, if a code to be written to the code memory 114 of the electronic circuit 11 is, for example, A231, it is found that the optical disk is the 231^{st} loading into the disk drive 1. Therefore, by allowing the loading of the optical disk into the disk drive 1 up to 999 times and preventing the reproduction of the optical disk that exceeds 999 times, the number of use of the optical disk can be limited. This control is performed, for example, by the management section 113.

In addition, every time the optical disk is loaded into the disk drive 1, a new code is written to the memory 14 of the disk drive 1. Therefore, if the management section 113 refers to the code information written to the code memory 114, it becomes possible to judge whether the disk drive 1 has used that optical disk before. Therefore, the management section 113 judges whether the code information assigned to the code of the optical disk is contained in the code information stored on the memory 14 of the disk drive 1 or on the management memory 115, and if it is contained, the management section 113 can judge that the optical disk has been loaded into the disk drive 1 before. On the other hand, if it is not contained, the management section 113 can judge that the use of the optical disk is the first loading into the disk drive 1. By referring to the number of the code written to the code memory 114, the management section 113 can also judge the number of use and reproduction of the optical disk.

Since the management section 113 is contained in the electronic circuit 11, the optical disk can manage the utilization results and reproduction history of itself.

In addition, if the stored contents of the code memory 114 stored in the electronic circuit 11 can be corrected and deleted by a special operation, the range of utilization can be further widened.

For instance, in the case of a rental optical disk, if limits are set to the number of users and number of utilization of the optical disk and to the number of available disk drives, utilization exceeding these limits can be prevented, or although utilization exceeding limits is allowed, an additional fee can be imposed on the exceeding range.

That is, when renting an optical disk in a rental store, if the above-described codes are written to set limits to the users and number of utilization of the optical disk and to the number of available disk drives, the lending of the optical disk rent by a customer can be prevented or available disk drives can be limited (in number and type). In addition, if utilization exceeding the above limits is made possible and an additional fee can be imposed on utilization that exceeds limits, more efficient development of business becomes possible.

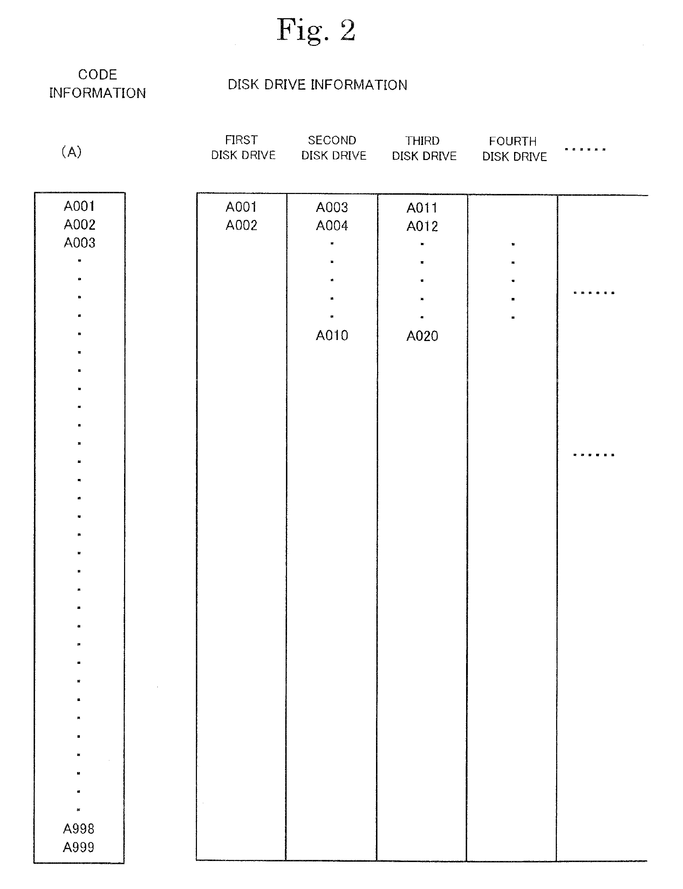

FIG. 2 shows examples of the code information (A) stored in the electronic circuit 11 and code information (B) written to the memories 14 of a plurality of disk drives (first, second, third, fourth, and fifth disk drives) for explaining operation of the first embodiment of the present invention.

When an optical disk is first loaded into the disk drive 1, the code information written to the ROM region of the optical disk is written to the code memory 114 of the electronic circuit 11 of the optical disk of the first embodiment.

FIG. 2A shows the code information stored on the code memory 114 of the electronic circuit 11, three-digit numbers (001 to 999) being added after the header A representing the type of disk used.

Next, if the optical disk is loaded into the first disk drive for the first reproduction, the first code A001 of the codes (A001 to A999) written to the code memory 114 of the electronic circuit 11 is written to the memory 14 of the disk drive 1. After the reproduction of the optical disk by the first disk drive, if the optical disk is unloaded from the first disk drive and is reloaded into the same disk drive for the second reproduction, the second code A002 of the codes (A001 to A999) of the code memory 114 of the electronic circuit 11 is read out and written to the memory 14 of that disk drive 1.

Next, if the optical disk is loaded into the second disk drive for the third reproduction, the third code A003 is read out from the code memory 114 of the electronic circuit 11 and written to the memory of the second disk drive. As shown in FIG. 2, if the optical disk is loaded in the second disk drive for the fourth through the tenth reproduction, the codes A004 to A010 are written to the memory of the second disk drive.

Subsequently, if the third disk drive is employed for the eleventh reproduction, the eleventh code A011 is read out from the code memory 114 of the electronic circuit 11 and written to the memory 14 of the third disk drive. Thereafter, when the third disk drive is employed for the twelve to the twentieth reproduction, the codes A011 to A020 are written to the memory 14 of the third disk drive. These codes are also written to the management memory 115 of the electronic circuit 11, so it becomes possible for the optical disk to manage.

As clearly seen from FIG. 2, if reference is made to the contents of the code information written to the memory 14 of the each disk drive or to the management memory 115 of the electronic circuit 11, the history of reproduction of the optical disk becomes clear. Therefore, by referring to the stored contents (A) of the code memory 114 of the electronic circuit 11 or the stored contents (B) of the memory of each disk drive with the management section 113, the number of reproduction of the optical disk can be limited or the number of disk drives for reproduction can be limited.

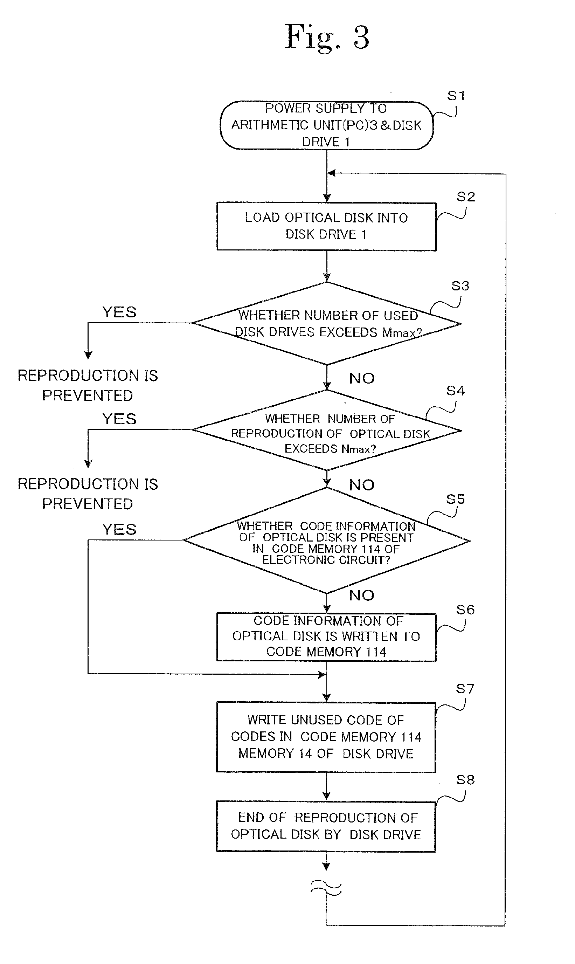

Next, an example of the operation of the present invention will be described with reference to FIG. 3.

If the power supplies for the arithmetic unit (PC) 3 and disk drive 1 are made on (step S 1) and an optical disk is loaded into the disk drive 1 (step S2), it is judged whether the number of disk drives used for reproducing the optical disk exceeds an allowable maximum disk drive number Mₘₐₓ, and it is also judged whether the number of reproduction of the optical disk exceeds an allowable reproduction number Nₘₐₓ (steps S3 and S4). The order of these judgments may be reversed. That is, in step S3, by determining the number of disk drives (M) used before on the basis of the information stored on the management memory 115, it is judged whether the number M exceeds the allowable maximum disk drive number Mₘₐₓ. In step S4, by referring to the information (e.g., the number of a code used) N stored on the management memory 115, it is judged whether the number N exceeds the allowable maximum reproduction number Nₘₐₓ. In steps S3 and S4, when the number of disk drives exceeds the allowable maximum disk drive number Mₘₐₓ, or when the number of reproduction (N) exceeds the allowable maximum reproduction number Nₘₐₓ, the reproduction of that optical disk is prevented.

If the judgments in steps S3 and S4 are both NO, it is subsequently judged whether the code information of the optical disk is present in the code memory 114 of the electronic circuit 11 (step S5). In step S5, if it is not present in the code memory 114, the code information of the optical disk is written to the code memory 114 (step S6).

When the code information of the optical disk is present in the code memory 114 (step S5), or after the code information of the optical disk has been written to the code memory 114 (step S6), an unused code of the codes stored on the code memory 114 is written to the memory 14 of the disk drive (step S7). If this code information is also stored on the management memory 115 of the electronic circuit 11, more effective management becomes possible. Furthermore, the user information authenticated in the living body authentication device 4 can also be stored on the management memory 115.

After the preprocessing of the reproduction of the optical disk is thus carried out, normal reproduction of the optical disk is performed by the disk drive (step S8).

After the end of the disk production, the optical disk is unloaded from the disk drive 1. Thereafter, if the optical disk is loaded into the disk drive 1 for the next reproduction, the above-described step S2 is carried out.

In the above-described processing steps, while it has been described that the number of optical disk reproduction and the number of disk drives for optical disk reproduction are limited, various kinds of management can be obtained if the required information is stored on the management memory 115. For instance, a limit can be imposed on the number of users who are permitted to reproduce the optical disk. In addition, while the above-described limits are being set, use and utilization (reproduction) that exceed the limits can be made possible. If utilization (number of drives, number of reproduction, number of users, etc.) that exceeds the limits is stored on the management memory 115, an additional fee can also be imposed on that utilization.

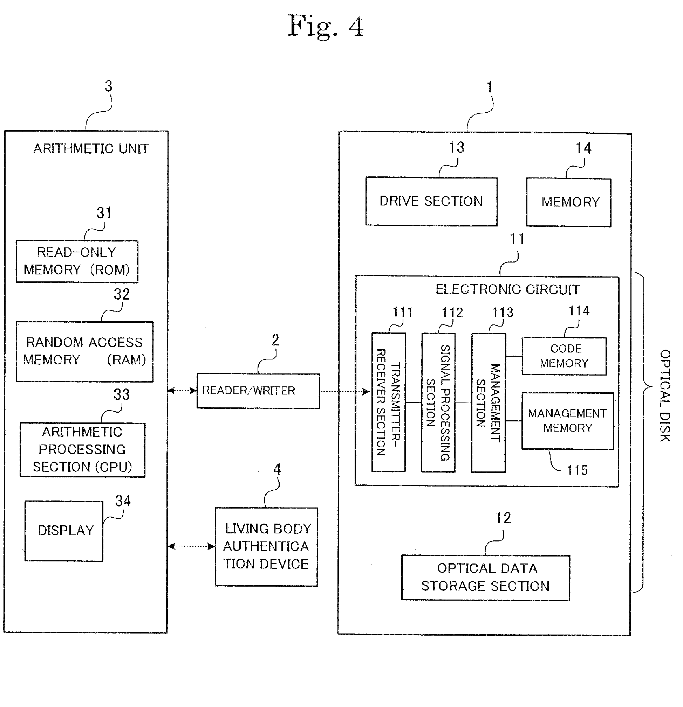

FIG. 4 is a schematic block diagram showing a second embodiment of the present invention. The basic configuration of the second embodiment is the same as the first embodiment shown in FIG. 1 but different in the manner in which signals are transmitted and received between a PC 3 and a disk drive 1. In FIG. 1, signal transmission and reception is performed through a cable. However, in the second embodiment shown in FIG. 4, signal transmission and reception is performed between the transmitter-receiver section 111 of an electronic circuit 11 mounted on an optical disk and a reader/writer 2. If the radio communication between them can thus be performed at a higher transmission rate, the transmission and reception of motion picture signals can also be performed with the system shown in FIG. 4.

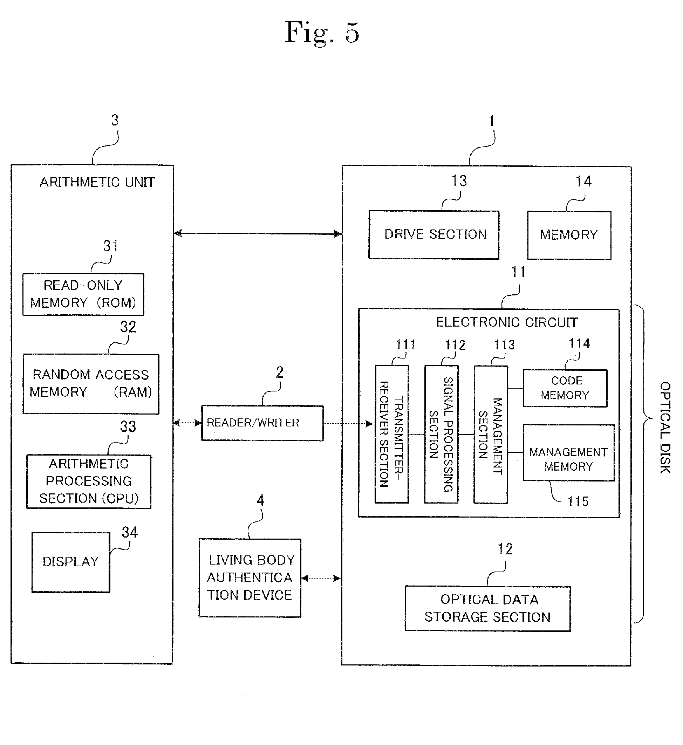

FIG. 5 is a schematic block diagram showing a third embodiment of the present invention. The basic configuration of the third embodiment is the same as the first embodiment shown in FIG. 1, but authentication by a living body authentication device 4 is performed in a disk drive 1.

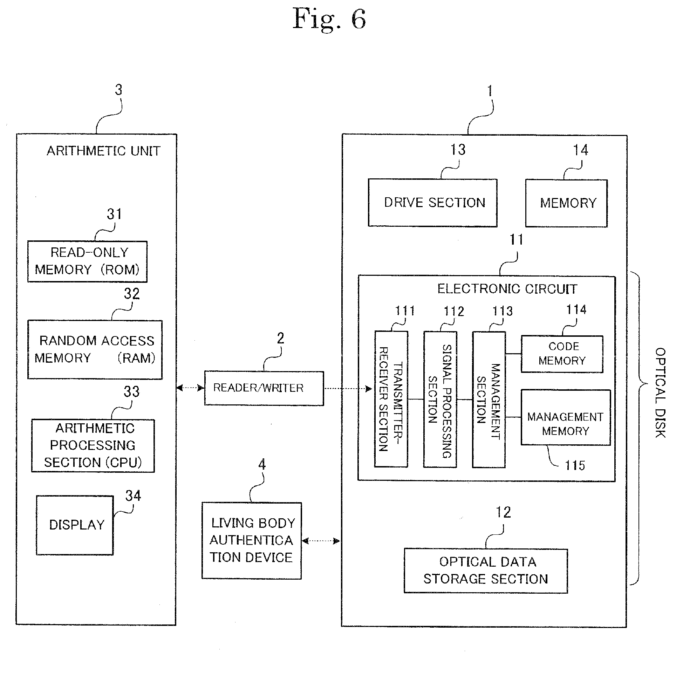

FIG. 6 is a schematic block diagram showing a fourth embodiment of the present invention. The basic configuration of the fourth embodiment is the same as the second embodiment shown in FIG. 4, but authentication by a living body authentication device 4 is performed in a disk drive 1.

The configurations and operations of the preferred embodiments of a disk/disk drive management system according to the present invention have been described in detail. However, such embodiments are mere examples of the present invention, and are not to limit the present invention. It would be obvious to those skilled in this art that within the scope of the present invention, many modifications and variations are possible according to specified uses.

## Claims

1. A disk/disk drive management system in which
on a first storage region of a disk having optical information written thereto and a second storage region of the disk having an electronic circuit mounted thereon, a plurality of arbitrary codes assigned uniquely to said disk are stored;
when said disk is loaded into a disk drive, said plurality of codes of said disk are read in and written to a code memory of said electronic circuit, and one of said plurality of codes is written to one memory provided in said disk drive and/or to a management memory provided on said electronic circuit; and
reproduction of said disk by said disk drive is controlled based on said one code written to said one memory and/or said management memory.

2. The disk/disk drive management system as set forth in claim 1,
wherein said one code written to said one memory and/or said management memory is an unused code.

3. The disk/disk drive management system as set forth in claim 1 or 2, wherein said electronic circuit has a management section for reading out said one code written to said one memory and/or said management memory and controlling reproduction of said disk.

4. The disk/disk drive management system as set forth in any of claims 1 through 3, wherein said one code written to said one memory and/or said management memory is an unused code every time said disk is loaded into said disk drive.

5. The disk/disk drive management system as set forth in any of claims 1 through 4, wherein management of said disk and disk drive includes at least either one of a number of times said disk is reproduced, a number of available disk drives, or a number of users.

6. The disk/disk drive management system as set forth in any of claims 1 through 5, wherein the electronic circuit of said disk comprises a radio frequency identification (RF-ID) section.

7. The disk/disk drive management system as set forth in any of claims 1 through 6, wherein the codes of said disk contain a code representing the type of disk being used, etc.

8. The disk/disk drive management system as set forth in any of claims 1 through 7, wherein said disk drive is connected to a personal computer so that predetermined data can be transmitted and received therebetween.

9. A disk/disk drive management system comprising:
a disk drive for rotating a disk to control reading and writing of data, said disk having on one surface thereof at least either a read-only memory region storing music information, image information, program information, and other information, or a random-access memory region to which arbitrary data can be written, and also having an electronic circuit with a central processing unit function, and further storing a plurality of codes uniquely assigned thereto;
an interface mounted on said disk for transmitting data processed by said electronic circuit to an external device and receiving data from said external device;
a signal reader/writer for transmitting and receiving data between said electronic unit and said external device through said interface; and
an arithmetic unit connected to said disk drive for carrying out predetermined arithmetic processing;
wherein, when said disk is loaded into said disk drive, said plurality of codes of said disk are read in and written to a code memory of said electronic circuit, and one of said plurality of codes is written to one memory provided in said disk drive and/or to a management memory provided on said electronic circuit; and
reproduction of said disk by said disk drive is controlled based on said one code written to said one memory.

10. The disk/disk drive management system as set forth in claim 9, wherein said one code written to said one memory is an unused code.

11. The disk/disk drive management system as set forth in claim 9, wherein a living body authentication device for limiting start and operation of the system to permitted users is connected to said arithmetic unit for limiting start of the system.

12. The disk/disk drive management system as set forth in claim 9, wherein a living body authentication device for limiting start and operation of the system to permitted users is connected to said disk drive for limiting start of the system.

13. The disk/disk drive management system as set forth in claim 11 or 12, wherein said living body authentication device is based on at least either one of among fingerprint authentication, face authentication, voiceprint authentication, and iris authentication.

14. The disk/disk drive management system as set forth in any of claims 9 through 13, wherein said electronic circuit comprises a radio frequency identification (RF-ID) section.

15. The disk/disk drive management system as set forth in claim 9, wherein signal transmission and reception between said electronic circuit and said external arithmetic unit is performed through a cable.

16. The disk/disk drive management system as set forth in claim 9, wherein signal transmission and reception between said electronic circuit and said external arithmetic unit is performed through said interface.

17. The disk/disk drive management system as set forth in any of claims 9 through 16, wherein the data transmission and reception to and from said electronic circuit through said interface is performed by radio.

18. The disk/disk drive management system as set forth in any of claims 1 through 17, wherein said disk comprises an optical disk.
